# FASCICULE DE BREVET EUROPEEN

(11) **EP 3 735 358 B1**
(45) Date de publication et mention de la délivrance du brevet: **28.08.2024**
(21) Numéro de dépôt: 19702944.0
(22) Date de dépôt: 03.01.2019
(51) Int. Cl.: B60H 1/00

(54) **CIRCUIT DE CONDITIONNEMENT THERMIQUE**
THERMISCHE KONDITIONIERUNGSSCHALTUNG
THERMAL CONDITIONING CIRCUIT

(30) Priorité: 04.01.2018 FR 1850044
(43) Date de publication de la demande: 11.11.2020
(73) Titulaire: Valeo Systemes Thermiques, 78320 Le Mesnil-Saint-Denis (FR)
(72) Inventeur: NICOLAS, Bertrand, 78322 LE MESNIL SAINT-DENIS CEDEX (FR); YAHIA, Mohamed, 78322 LE MESNIL SAINT-DENIS CEDEX (FR)
(74) Mandataire: Valeo Systèmes Thermiques
(86) Numéro de dépôt international: PCT/FR2019/050005
(87) Numéro de publication internationale: WO 2019/135049

(56) Documents cités:
- EP-A1- 2 774 787
- WO-A1-2013/079342
- CN-A- 104 180 556
- DE-A1- 102015 121 185
- FR-A1- 3 025 297

## Description

La présente invention concerne un circuit de conditionnement thermique pour véhicule automobile hybride ou électrique, plus particulièrement ce type de circuit permet de conditionner thermiquement un flux d'air destiné à aboutir dans l'habitacle dudit véhicule.

De façon habituelle dans un véhicule automobile, le circuit de conditionnement thermique comprend une pluralité d'échangeurs thermiques dans lesquels circule un fluide frigorigène.

Les changements d'état du fluide frigorigène à travers les différentes branches du circuit, et par l'intermédiaire desdits échangeurs thermiques, vont permettre de refroidir et/ou de réchauffer un flux d'air traversant un ou plusieurs échangeurs et qui est destiné à aboutir dans l'habitacle du véhicule automobile.

Généralement, ledit circuit présente plusieurs modes de fonctionnement qui permettent, par exemple, de chauffer ou de refroidir l'habitacle, ou encore de déshumidifier l'air destiné à l'habitacle.

Le document WO2013079342 décrit un circuit de conditionnement thermique pour un véhicule automobile ou hybride dans lequel est apte à circuler un fluide frigorigène, ledit circuit comprenant un compresseur, un condenseur , un évapo-condenseur , le circuit étant configuré pour fonctionner au moins selon les trois modes suivants, dans lesquels le fluide frigorigène est apte à circuler en série et de façon successive :
- par le condenseur , l'évapo-condenseur et l'évaporateur , dit premier mode;
- par le condenseur , l'évaporateur et l'évapo-condenseur , dit deuxième mode;
ainsi que selon un autre mode, dit troisième mode, dans lequel l'évaporateur , est disposé en parallèle de l'évapo-condenseur , le fluide frigorigène étant alors apte à circuler en série et de façon successive par le condenseur puis par au moins l'évaporateur et l'évapo-condenseur disposés en parallèle.

Par ailleurs, dans le cadre d'un véhicule hybride ou électrique, il est également nécessaire de maintenir la batterie électrique (ou un organe électrique quelconque) du véhicule dans une plage de température déterminée afin, par exemple, de préserver sa durée de vie. A cet effet, le circuit de conditionnement thermique comprend un échangeur thermique couplé thermiquement à un organe électrique du véhicule, tel qu'une batterie électrique du véhicule, afin réguler la température dudit organe.

Ainsi, la présente invention vise à proposer un nouveau type de circuit de conditionnement thermique, d'une conception simple, qui permet d'assurer le confort des usagers grâce à une pluralité de modes de fonctionnement pour faire face à diverses conditions extérieures de température et d'humidité, tout en permettant de conditionner thermiquement un organe électrique du véhicule.

La présente invention**,** telle que définie dans la revendication 1, est donc un circuit de conditionnement thermique pour un véhicule automobile hybride ou électrique, dans lequel est apte à circuler un fluide frigorigène, ledit circuit comprenant,
un compresseur , un condenseur , un évapo-condenseur , un évaporateur et un échangeur thermique couplé thermiquement à un organe électrique, tel qu'une batterie électrique de véhicule,
caractérisé en ce que le circuit comprend un premier détendeur situé directement en amont de l'évaporateur , un deuxième détenteur situé directement en amont de l'échangeur thermique , un troisième détendeur situé directement en amont de l'évapo-condenseur lorsque celui-ci fonctionne comme un condenseur et un détendeur bidirectionnel et en ce que le circuit est configuré pour fonctionner au moins selon les trois modes suivants, dans lesquels le fluide frigorigène est apte à circuler en série et de façon successive :
   - par le condenseur , le troisième détendeur l'évapo-condenseur le premier détendeur et l'évaporateur , dit premier mode ;
   - par le condenseur , le premier détendeur , l'évaporateur , le détendeur bidirectionnel , et l'évapo-condenseur , dit deuxième mode ;
ainsi que selon un autre mode, dit troisième mode, dans lequel le premier détendeur , l'évaporateur , sont disposés en parallèle de l'échangeur thermique ainsi que du second détendeur associé à cet échangeur et de l'évapo-condenseur , le fluide frigorigène étant alors apte à circuler en série et de façon successive par le condenseur puis par au moins deux desdits éléments disposés en parallèle.

Ainsi, le circuit selon l'invention permet dans le premier mode de fonctionnement de refroidir l'air destiné à l'habitacle, dans le deuxième mode de chauffer l'air destiné à l'habitacle et dans le troisième mode de déshumidifier l'air destiné à l'habitacle et de refroidir l'organe électrique lorsque ledit échangeur thermique est parcouru par le fluide frigorigène.

Le troisième mode permet par sa modularité d'assurer la fonction déshumidification de l'air selon des températures et des degrés d'humidité extérieurs variés, tout en refroidissant l'organe et/ou une batterie électrique du véhicule lorsque cela est nécessaire.

Selon une caractéristique possible, l'évapo-condenseur est disposé en face avant du véhicule, l'évapo-condenseur permet par exemple un échange de chaleur entre un flux d'air, notamment extérieur, traversant ledit évapo-condenseur et le fluide frigorigène (circulant à l'intérieur de l'évapo-condenseur).

On notera que le terme « extérieur » utilisé pour qualifier un flux d'air indique que le flux d'air provient de l'extérieur du véhicule.

Selon une autre caractéristique possible, l'évaporateur est disposé à l'intérieur d'un dispositif de ventilation, chauffage et/ou climatisation du véhicule automobile.

Un dispositif de ventilation, chauffage, et/ou climatisation est un boîtier, situé sous la planche de bord du véhicule, qui comporte un ou plusieurs échangeurs thermiques du circuit de conditionnement thermique, un pulseur d'air, au moins une entrée d'air et des sorties d'air. Le dispositif comprend également des volets pour la gestion des flux d'air à l'intérieur dudit dispositif.

Selon une autre caractéristique possible, le circuit de conditionnement thermique comprend un circuit de fluide caloporteur, tel que de l'eau glycolée, qui comporte un organe électrique et/ou une batterie électrique du véhicule.

Selon une autre caractéristique possible, ledit échangeur thermique, c'est-à-dire l'échangeur thermique couplé thermiquement à l'organe électrique, est également connecté à un circuit de fluide caloporteur.

L'échangeur thermique permet les échanges de chaleur entre le fluide caloporteur et le fluide frigorigène.

Selon une autre caractéristique possible, le circuit de fluide caloporteur comprend une pompe apte à faire circuler le fluide caloporteur dans ledit circuit.

Selon une autre caractéristique possible, le condenseur est disposé à l'intérieur du dispositif de ventilation, chauffage et/ou climatisation du véhicule.

Selon une autre caractéristique possible, le circuit est configuré pour que le circuit fonctionne selon le mode suivant, dans lequel le fluide frigorigène est apte à circuler en série et de façon successive par le condenseur, l'échangeur thermique, et l'évapo-condenseur, dit quatrième mode.

Selon une autre caractéristique possible, le circuit est configuré pour que le circuit fonctionne selon le mode suivant, dans lequel le fluide frigorigène est apte à circuler en série et de façon successive par le condenseur, l'évapo-condenseur et l'échangeur thermique, dit cinquième mode.

Selon une autre caractéristique possible, le circuit est configuré pour permettre l'inversion du sens de circulation du fluide frigorigène dans l'évapo-condenseur au moins entre les premier et deuxième modes de fonctionnement dudit circuit.

Selon une autre caractéristique possible, le détendeur bidirectionnel permet au fluide réfrigérant le traversant ou ayant traversé l'évapo-condenseur de subir une détente, que l'évapo-condenseur fonctionne en évaporateur ou en condenseur.

Le détendeur bidirectionnel est ainsi configuré pour réaliser une détente du fluide réfrigérant dans le deuxième ou le quatrième mode de fonctionnement avant qu'il ne circule dans l'évapo-condenseur.

Le détendeur bidirectionnel est également configuré pour réaliser une détente du fluide réfrigérant dans certaines variantes du troisième mode de fonctionnement après que le fluide ait circulé dans l'évapo-condenseur.

On notera qu'on entend par directement, le fait que le fluide réfrigérant ne traverse aucun autre élément intermédiaire pouvant lui faire subir une transformation physique (amenant à une variation d'une grandeur physique du fluide, telle que la pression, l'enthalpie, etc.), l'élément intermédiaire étant par exemple un échangeur, détendeur, etc. Selon une autre caractéristique possible, le circuit comprend :
- une première branche comportant le compresseur et le condenseur en aval du compresseur, ainsi qu'une vanne et un réservoir, le réservoir étant disposé en amont du compresseur et la vanne étant disposée en amont du réservoir ;
- une deuxième branche comportant, une vanne, l'évaporateur et l'échangeur thermique ;
- une troisième branche comportant l'évapo-condenseur ;
lesdites première, deuxième et troisième branches étant reliées en parallèle les unes aux autres.

Selon une autre caractéristique possible, le circuit comprend :
- une quatrième branche qui relie la deuxième branche à la troisième branche ;
   la liaison étant réalisée sur la deuxième branche en amont des premier et deuxième détendeurs et et en aval de la vanne de la deuxième branche dans le sens de l'écoulement du fluide comme indiqué sur la figure, la liaison étant réalisée sur la troisième branche entre le détendeur bidirectionnel et l'évapo-condenseur ;
- une cinquième branche comportant une vanne qui relie la troisième branche à la première branche, la liaison sur la troisième branche étant réalisée entre le troisième détendeur et l'évapo-condenseur, la liaison sur la première branche entre le réservoir et la vanne de la première branche.

Selon une autre caractéristique possible, la deuxième branche comprend deux sous-branches connectées en parallèle l'une de l'autre, l'une comportant l'évaporateur et l'autre l'échangeur thermique.

L'invention sera mieux comprise, et d'autres buts, détails, caractéristiques et avantages de celle-ci apparaîtront plus clairement au cours de la description suivante d'un mode de réalisation particulier de l'invention, donnée uniquement à titre illustratif et non limitatif, en référence aux dessins annexés, sur lesquels :
- la figure 1 représente une vue schématique du circuit de conditionnement thermique ;
- la figure 2 est une représentation schématique linéaire lorsque le circuit de la figure 1 fonctionne selon un premier mode ;

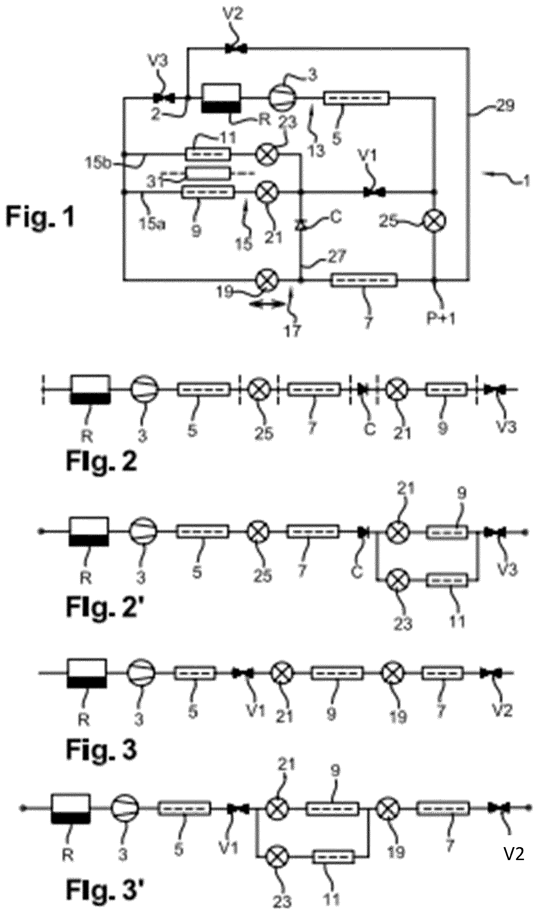

- la figure 2' est une représentation schématique linéaire lorsque le circuit de la figure 1 fonctionne selon une variante du premier mode ;
- la figure 3 est une représentation schématique linéaire lorsque le circuit de la figure 1 fonctionne selon un deuxième mode ;
- la figure 3' est une représentation schématique linéaire lorsque le circuit de la figure 1 fonctionne selon une variante du deuxième mode ;

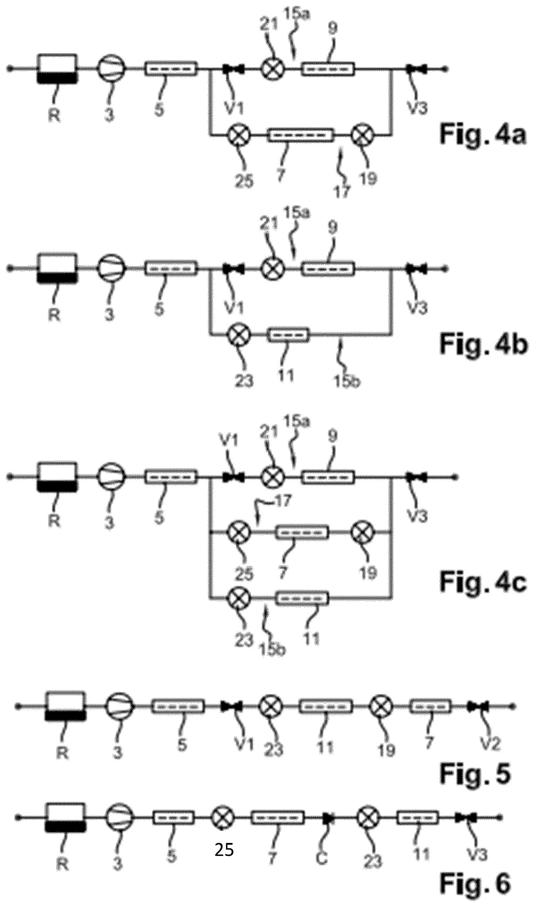

- la figure 4a est une représentation schématique linéaire lorsque le circuit de la figure 1 fonctionne selon une variante de fonctionnement du troisième mode ;
- la figure 4b est une représentation schématique linéaire lorsque le circuit de la figure 1 fonctionne selon une autre variante de fonctionnement du troisième mode ;
- la figure 4c est une représentation schématique linéaire lorsque le circuit de la figure 1 fonctionne selon encore une autre variante de fonctionnement du troisième mode ;
- la figure 5 est une représentation schématique linéaire lorsque le circuit de la figure 1 fonctionne selon un quatrième mode ;
- la figure 6 est une représentation schématique linéaire lorsque le circuit de la figure 1 fonctionne selon un cinquième mode.

La figure 1 représente une vue schématique du circuit 1 de conditionnement thermique pour un véhicule automobile hybride ou électrique.

Le circuit 1 comprend une pluralité d'échangeur de chaleur, notamment un compresseur 3, un condenseur 5, un évaporateur 9, un évapo-condenseur 7 et un échangeur thermique 11 couplé thermiquement à une batterie électrique dudit véhicule. On notera cependant que ledit échangeur thermique 11 peut être couplé thermiquement à tout organe électrique du véhicule nécessitant d'être conditionné thermiquement.

Le circuit 1 comprend également des branches reliant ses différents éléments les uns aux autres, de manière à ce qu'un fluide frigorigène soit apte à circuler dans ledit circuit 1 selon des chemins définis.

On notera par exemple que :
- l'évapo-condenseur 7 peut être disposé en face avant du véhicule, l'évapo-condenseur étant apte à être traversé par un flux d'air (par exemple extérieur). L'évapo-condenseur permet un échange de chaleur entre un flux d'air traversant ledit évapo-condenseur et le fluide frigorigène circulant à l'intérieur de l'évapo-condenseur. Le flux d'air traversant ledit évapo-condenseur est par exemple un flux d'air extérieur.
- L'évaporateur 9 est disposé à l'intérieur d'un dispositif de ventilation, chauffage et/ou climatisation du véhicule automobile. L'évaporateur permet un échange de chaleur entre un flux d'air traversant ledit évaporateur et le fluide frigorigène circulant à l'intérieur dudit évaporateur. Plus particulièrement, l'évaporateur a pour fonction principale de refroidir un flux d'air destiné à aboutir dans l'habitacle.
- Le condenseur 5 peut être disposé à l'intérieur d'un dispositif de ventilation, chauffage et/ou climatisation du véhicule automobile, ce condenseur est alors un condenseur fluide frigorigène/air généralement appelé condenseur intérieur, interne ou sur air. Le condenseur peut également être un condenseur fluide frigorigène/fluide caloporteur, c'est-à-dire un condenseur qui couple thermiquement le circuit 1 à un autre circuit dans lequel circule un fluide caloporteur, tel que de l'eau glycolée. Ce type de condenseur est généralement appelé condenseur à eau.

Dans une variante de réalisation de l'invention non représentée, le circuit de conditionnement comprend un condenseur sur air et un condenseur sur eau couplé thermiquement au circuit de refroidissement du moteur électrique du véhicule. Lesdits condenseurs sur air et sur eau sont alors placés en série, le fluide frigorigène étant apte à traverser successivement le condenseur sur eau, puis le condenseur sur air.

On notera qu'un dispositif de ventilation, chauffage, et/ou climatisation est un boîtier situé sous le tableau de bord du véhicule. Ce dispositif comprend un ou plusieurs échangeurs thermiques qui ont pour fonction de conditionner thermiquement le flux d'air destiné à l'habitacle, ainsi qu'au moins une entrée d'air et au moins une sortie d'air débouchant dans l'habitacle. Le dispositif peut également comprendre un pulseur d'air, afin de générer un flux d'air entre lesdites au moins une entrée et sortie d'air.

L'échangeur thermique 11, c'est-à-dire l'échangeur thermique couplé thermiquement à un organe électrique ou à une batterie, a pour fonction de conditionner thermiquement l'organe électrique ou la batterie, c'est-à-dire à la chauffer ou à la refroidir en fonction des besoins, afin que la batterie ou l'organe électrique reste à une température adéquate pour préserver sa durée de vie et son rendement.

L'échangeur batterie permet également les échanges de chaleur entre le fluide caloporteur et le fluide frigorigène, ces échanges de chaleur peuvent être directs ou indirects.

Ainsi, dans une autre variante de réalisation de l'invention non représentée, dans la cadre d'un échange indirect, le circuit 1 comprend un circuit de fluide caloporteur, tel que de l'eau glycolée, comportant la batterie, une pompe et l'échangeur 11, ledit échangeur 11 est donc couplé thermiquement à la batterie et/ou un organe électrique par l'intermédiaire du circuit de fluide caloporteur.

Plus particulièrement, le circuit de conditionnement thermique 1 est configuré pour fonctionner selon différents modes qui seront détaillés ci-après.

Ainsi, ledit circuit 1 comprend :
- une première branche 13 comportant le compresseur 3 et le condenseur 5 disposé en aval du compresseur 3 ;
- une deuxième branche 15 comportant l'évaporateur 9 et l'échangeur 11 thermique couplé thermiquement à un organe électrique ;
- une troisième branche 17 comportant l'évapo-condenseur 7 ;
lesdites première 13, deuxième 15 et troisième 17 branches étant reliées en parallèle les unes aux autres.

On notera que les termes « amont » et « aval » seront utilisés pour faciliter la description de l'invention, ceci les branches et échangeurs dans lesquels, le sens de circulation de fluide ne change pas ceci quelque soit le mode de fonctionnement dudit circuit 1.

Ainsi, la première branche 13 comporte un réservoir R placé directement en amont du compresseur 3, lui-même en amont du condenseur 5. Le terme « directement » doit être interprété comme le fait qu'il n'y a pas d'élément intermédiaire entre deux sous-éléments constitutifs dudit circuit. La première branche 13 comprend également une vanne V3 située en amont du réservoir R.

La deuxième branche 15 comprend deux sous-branches 15a et 15b connectées en parallèle l'une de l'autre, l'une comportant l'évaporateur 9 et l'autre l'échangeur thermique 11. La première sous-branche 15a comporte l'évaporateur 9 et la deuxième sous-branche 15b comporte l'échangeur thermique 11. La deuxième branche 15 comprend également une vanne V1 située en amont des premier et deuxième détendeurs 21 et 23.

La sortie 5a du condenseur est ainsi reliée aux deuxième 15 et troisième 17 branches du circuit par l'intermédiaire d'une quatrième branche 19, dite branche de liaison.

De plus, ledit circuit 1 comprend au moins trois détendeurs :
- un premier détendeur 21 situé directement en amont de l'évaporateur 9 ;
- un deuxième détendeur 23 situé directement en amont de l'échangeur thermique 11 ;
- un troisième détendeur 25 situé directement en amont de l'évapo-condenseur 7 lorsque celui-ci fonctionne comme un condenseur.

Par ailleurs, le circuit comprend :
- une quatrième branche 27 qui relie la deuxième branche 15 à la troisième branche 17, la liaison étant réalisée sur la deuxième branche 15 en amont des premier et deuxième détendeurs, respectivement 21 et 23, et en aval de la vanne V1 de la deuxième branche 15 dans le sens de l'écoulement du fluide, la liaison étant réalisée sur la troisième branche 17 entre le détendeur bidirectionnel 19 et l'évapo-condenseur 7 ;
- une cinquième branche 29 comportant une vanne V2 qui relie la troisième branche 17 à la première branche 13, la liaison sur la troisième branche 17 étant réalisée entre le troisième détendeur 25 et l'évapo-condenseur 7, la liaison sur la première branche étant réalisée entre le réservoir R et la vanne V3 de la première branche 13.

Par ailleurs, la quatrième branche 27 comprend un clapet anti-retour C, ce dernier permet au fluide réfrigérant de refluer vers l'évapo-condenseur 7 dans certains modes de fonctionnement.

La figure 2 est donc une représentation schématique linéaire du circuit 1 de conditionnement thermique lorsque ledit circuit 1 fonctionne selon un premier mode de fonctionnement.

Ce premier mode permet notamment de refroidir l'air destiné à l'habitacle du véhicule par l'intermédiaire de l'évaporateur, par exemple situé dans le dispositif de ventilation, chauffage et/ou climatisation (non représenté).

Ainsi, dans ce premier mode, le fluide réfrigérant est apte à circuler successivement dans le condenseur, l'évapo-condenseur puis dans l'évaporateur.

Le fluide réfrigérant est donc comprimé par le compresseur 3, à la sortie du compresseur 3 le fluide réfrigérant est dans un état gazeux haute pression, puis subit une condensation réalisée successivement par le condenseur 5 et l'évapo-condenseur 7 (fonctionnant ainsi comme un condenseur). Le fluide réfrigérant en sortie de l'évapo-condenseur est alors dans un état si possible liquide et sous refroidi à haute pression, et va subir une détente réalisée par premier détendeur 21, le fluide est alors détendu à basse pression avant de circuler à travers l'évaporateur 9.

Le flux d'air destiné à l'habitacle et traversant l'évaporateur 9 cède alors des calories (ou de la chaleur) au fluide réfrigérant, réchauffant ce dernier et permettant le refroidissement du flux d'air destiné à déboucher dans l'habitacle.

On notera par ailleurs que l'évapo-condenseur 7 doit être traversé par un flux d'air, extérieur dans le cas présent, pour permettre la condensation du fluide réfrigérant le traversant.

De plus, dans le premier mode de fonctionnement, le troisième détendeur 25 situé en amont de l'évapo-condenseur 7 est complètement ouvert.

Ce premier mode de fonctionnement peut, par ailleurs, être utilisé pour la déshumidification de l'air destiné à déboucher dans l'habitacle. On assèche l'air en le refroidissant, d'abord, par l'évaporateur 9, puis en le chauffant par l'intermédiaire du condenseur 5.

Dans certaines situations où il y a un excès de puissance fourni par le compresseur 3, l'évapo-condenseur 7 complète la condensation du fluide réfrigérant issu du condenseur 5.

Une variante de ce premier mode de fonctionnement est représentée à la figure 2', plus particulièrement dans cette variante, le deuxième détendeur 23 permet au fluide de circuler dans l'échangeur thermique 11. Ainsi, on peut refroidir ou déshumidifier le flux d'air destiné à déboucher dans l'habitacle tout en refroidissant la batterie du véhicule par l'intermédiaire de l'échangeur thermique 11.

Ainsi, dans cette variante du premier mode, le fluide réfrigérant est apte à circuler successivement dans le condenseur 5, l'évapo-condenseur 7 puis dans l'évaporateur 9 et l'échangeur thermique 11 qui sont disposés en parallèle l'un par rapport à l'autre.

On notera ainsi que :
- le deuxième détendeur 23 fait office de vanne lorsque le circuit 1 fonctionne selon le premier mode et de détendeur dans la variante du premier mode ;
- l'évaporateur 9 et l'échangeur thermique 11 fonctionnent à des niveaux de pression sensiblement équivalents ;
- les premier et troisième détendeurs respectivement placés en amont de l'évaporateur 9 et de l'échangeur thermique 11 permettent également de réguler (ou répartir) le débit de fluide réfrigérant dans chacun des échangeurs afin de répondre aux besoins spécifiques de chacun de ces éléments.

La figure 3 est donc une représentation schématique linéaire du circuit 1 de conditionnement thermique lorsque ledit circuit 1 fonctionne selon un deuxième mode de fonctionnement.

Ce deuxième mode permet notamment de réchauffer l'air destiné à l'habitacle du véhicule par l'intermédiaire de l'évaporateur 9 et du condenseur 5.

Ainsi, dans ce deuxième mode, le fluide réfrigérant est apte à circuler successivement dans le condenseur 5, l'évaporateur 9 puis dans l'évapo-condenseur 7.

Le fluide réfrigérant est donc comprimé par le compresseur 3, à la sortie du compresseur 3 le fluide réfrigérant est dans un état gazeux haute pression, traverse le condenseur 5 puis circule successivement par l'évaporateur 9 et l'évapo-condenseur 7 (fonctionnant comme un évaporateur).

Plus particulièrement, le fluide réfrigérant en sortie du condenseur 5 subit ou non une détente par le premier détendeur 21, qui peut être alors partiellement ou complètement ouvert, afin d'amener le fluide réfrigérant dans un état de pression intermédiaire, avant de circuler dans l'évaporateur 9. Ceci permet de contrôler la pression du fluide réfrigérant afin de ne pas dépasser la pression maximale admissible par l'évaporateur 9. Le flux d'air destiné à l'habitacle est ainsi réchauffé par la traversée successive de l'évaporateur 9 et du condenseur 5.

En sortie de l'évaporateur 9, le fluide réfrigérant qui a été refroidi par l'air traversant l'évaporateur, subit une détente par le détendeur bidirectionnel 19 qui l'amène généralement dans un état de mélange liquide-vapeur à basse pression avant que celui-ci ne circule dans l'évapo-condenseur 7. Ledit évapo-condenseur 7 (fonctionnant donc comme un évaporateur), traversé par un flux d'air extérieur, permet l'évaporation du fluide réfrigérant (le flux d'air cédant des calories audit fluide). Ainsi, à la sortie de l'évapo-condenseur 7, le fluide est à l'état proche de la « saturation gaz » à basse-pression avant que celui-ci ne soit à nouveau comprimé par le compresseur 3.

Ce deuxième mode est préférentiellement utilisé pour une température extérieure (ou ambiante) inférieure à -5°C, mais fonctionne également pour des températures extérieures comprises entre -5°C et 20°C.

Par ailleurs, si la température extérieure est comprise entre 2 et 5°C, l'évaporateur 9 fonctionne de préférence alors en en mode évaporateur, le fluide réfrigérant subit alors deux évaporations en série, réalisées respectivement par l'évaporateur 9 et l'évapo-condenseur 7.

Cela permet, par ailleurs, de réaliser, dans certains modes de fonctionnement du dispositif de chauffage, ventilation et/ou climatisation (plus particulièrement quand le flux d'air destiné à l'habitacle provient au moins en partie de l'habitacle lui-même et non pas seulement de l'extérieur), une récupération de la chaleur sur l'air provenant de l'habitacle et sur l'air ambiant (ou extérieur), cela a pour conséquence de limiter les risques de givrage de l'évapo-condenseur 7.

Une variante de ce deuxième mode de fonctionnement est représentée à la figure 3', plus particulièrement dans cette variante, le deuxième détendeur 23 permet au fluide de circuler dans l'échangeur thermique 11.

Ainsi, on peut réchauffer le flux d'air destiné à déboucher dans l'habitacle tout en réchauffant ou refroidissant la batterie (ou un organe électrique du véhicule) du véhicule par l'intermédiaire de l'échangeur thermique 11.

En effet, le fluide réfrigérant peut réchauffer la batterie (ou un organe électrique du véhicule) lorsque celle-ci présente une température inférieure à 10°C.

Ainsi, dans cette variante du premier mode, le fluide réfrigérant est apte à circuler successivement dans le condenseur 5, l'évaporateur 9 et l'échangeur thermique 11 qui sont disposés en parallèle l'un par rapport à l'autre, et par la suite dans l'évapo-condenseur 7.

On notera ainsi que :
- le deuxième détendeur 23 fait office de vanne fermée lorsque le circuit 1 fonctionne selon le deuxième mode et de détendeur dans la variante du deuxième mode ;
- l'évaporateur 9 et l'échangeur thermique 11 fonctionnent à des niveaux de pression sensiblement équivalents ;
- les premier et troisième détendeurs, respectivement 21 et 23, ainsi que le détendeur bidirectionnel 19 respectivement placés en amont de l'évaporateur 9, de l'échangeur thermique 11 et de l'évapo-condenseur 7 (l'échangeur bidirectionnel étant également en aval de l'évaporateur et de l'échangeur thermique) permettent d'ajuster la température de l'évaporateur 9 afin de limiter si nécessaire l'échange thermique, au niveau de l'échangeur 11 avec l'organe électrique. Plus particulièrement, on peut faire en sorte que la batterie (ou l'organe électrique si celui-ci est apte à le faire) absorbe une grande partie de la puissance ou chaleur produite par le circuit 1.

Plus particulièrement, dans la première variante du troisième mode de fonctionnement représentée à la figure 4a, ledit fluide traverse l'évapo-condenseur 7 et l'évaporateur 9 qui sont disposés en parallèle l'un de l'autre.

Ainsi, le fluide destiné à traverser la deuxième branche 15 puis la première sous-branche 15a subit une détente par le premier détendeur 21 avant de circuler dans l'évaporateur 9.

Tandis que le fluide destiné à traverser la troisième branche 17 subit une détente par le troisième détendeur 25 avant de circuler dans l'évapo-condenseur 7. A la sortie de la l'évapo-condenseur 7, le fluide réfrigérant subit, si nécessaire, une détente par le détendeur bidirectionnel 19.

Par la suite, les portions de fluide réfrigérant ayant circulées respectivement à travers l'évaporateur 9 et l'évapo-condenseur 7 se rejoignent en amont de la troisième vanne V3 avant de circuler dans la première branche 13 et de déboucher dans le réservoir R avant, que ledit fluide, soit ré-aspiré par le compresseur 3.

Ainsi, le flux d'air destiné à déboucher dans l'habitacle est refroidi par l'évaporateur 9, avant d'être réchauffé par le condenseur 5.

Plus particulièrement, dans la deuxième variante du troisième mode de fonctionnement représentée à la figure 4b, ledit fluide traverse l'échangeur thermique 11 et l'évaporateur 9 qui sont disposés en parallèle l'un de l'autre.

Ainsi, le fluide destiné à traverser la deuxième branche 15 puis la première sous-branche 15a subit une détente par le premier détendeur 21 avant de circuler dans l'évaporateur 9.

Tandis que le fluide destiné à traverser la deuxième branche 15 puis la première sous-branche 15b subit une détente par le deuxième détendeur 23 avant de circuler dans l'échangeur thermique 11.

Par la suite, les portions de fluide réfrigérant ayant circulées respectivement à travers l'évaporateur 9 et l'échangeur thermique 11 se rejoignent en amont de la troisième vanne V3 avant de circuler dans la première branche 13 et de déboucher dans le réservoir R avant, que ledit fluide, soit ré-aspiré par le compresseur 3.

Ainsi, le flux d'air destiné à déboucher dans l'habitacle est refroidi par l'évaporateur 9, avant d'être réchauffé par le condenseur 5.

Plus particulièrement, dans la troisième variante du troisième mode de fonctionnement représentée à la figure 4c, ledit fluide traverse l'évaporateur 9, l'évapo-condenseur 7 et l'échangeur thermique 11 qui sont disposés en parallèle les uns des autres.

Ainsi, le fluide destiné à traverser la deuxième branche 15 puis la première sous-branche 15a subit une détente par le premier détendeur 21 avant de circuler dans l'évaporateur 9.

Le fluide destiné à traverser la deuxième branche 15 puis la première sous-branche 15b subit une détente par le deuxième détendeur 23 avant de circuler dans l'échangeur thermique 11.

Le fluide destiné à traverser la deuxième branche 15 puis la première sous-branche 15b subit une détente par le deuxième détendeur 23 avant de circuler dans l'échangeur thermique 11.

Tandis que le fluide destiné à traverser la troisième branche 17 subit une détente par le troisième détendeur 25 avant de circuler dans l'évapo-condenseur 7. A la sortie de la l'évapo-condenseur 7, le fluide réfrigérant subit une détente par le détendeur bidirectionnel 19.

Par la suite, les portions de fluide réfrigérant ayant circulées respectivement à travers l'évaporateur 9, l'échangeur thermique 11 et l'évapo-condenseur 7 se rejoignent en amont de la troisième vanne V3 avant de circuler dans la première branche 13 et de déboucher dans le réservoir R avant, que ledit fluide, soit ré-aspiré par le compresseur 3.

Ainsi, le flux d'air destiné à déboucher dans l'habitacle est refroidi par l'évaporateur 9, avant d'être réchauffé par le condenseur 5.

La figure 5, quant à elle, est une représentation schématique linéaire lorsque le circuit de la figure 1 fonctionne selon un quatrième mode de fonctionnement, dit mode « chauffage batterie ».

Dans le quatrième mode de fonctionnement, ledit fluide traverse successivement le condenseur 5, l'échangeur thermique 11 et l'évapo-condenseur 7. En effet, ces éléments 5, 7 et 11 sont disposés en série dans le quatrième mode de fonctionnement.

Le fluide réfrigérant est donc comprimé par le compresseur 3, à la sortie du compresseur 3, le fluide réfrigérant est dans un état gazeux haute pression, puis subit une condensation réalisée successivement par le condenseur 5. Le fluide réfrigérant en sortie du condenseur 5 subit, si nécessaire, une détente réalisée par le deuxième détendeur 23 avant de circuler dans le l'échangeur thermique 11.

Par la suite, le fluide réfrigérant subit une détente réalisée par le détendeur bidirectionnel 19, avant de circuler à travers l'évapo-condenseur 7, puis le réservoir R avant d'être ré-aspiré par le compresseur 3.

Le quatrième mode de fonctionnement a pour fonction de chauffer la batterie électrique du véhicule (ou un organe électrique), mais ledit mode peut également avoir pour fonction la récupération de chaleur (ou de calories) sur l'organe électrique, par l'intermédiaire de l'échangeur thermique 11. Plus particulièrement, il y a récupération de chaleur (ou de calories) sur l'organe électrique si la température d'évaporation au niveau de l'échangeur 11 est inférieure à la température dudit organe.

La figure 6, quant à elle, est une représentation schématique linéaire lorsque le circuit de la figure 1 fonctionne selon un cinquième mode de fonctionnement, dit mode « refroidissement rapide de la batterie ou de l'organe électrique ».

Dans le cinquième mode de fonctionnement, ledit fluide traverse successivement le condenseur 5, l'évapo-condenseur 7 et l'échangeur thermique 11. En effet, ces éléments 5, 7 et 11 sont disposés en série dans le cinquième mode de fonctionnement.

Le fluide réfrigérant est donc comprimé par le compresseur 3, à la sortie du compresseur 3, le fluide réfrigérant est dans un état gazeux haute pression, puis subit une condensation réalisée successivement par le condenseur 5 et l'évapo-condenseur 7. Le fluide réfrigérant en sortie de l'évapo-condenseur 7 subit une détente réalisée par le deuxième détendeur 23 avant de circuler dans l'échangeur thermique 11.

Par la suite, le fluide réfrigérant rejoint le réservoir R avant d'être ré-aspiré par le compresseur 3.

Le cinquième mode de fonctionnement a pour fonction de refroidir la batterie électrique du véhicule lorsque celle-ci subit une charge rapide et est donc soumise à un échauffement important et rapide. Ce dernier mode peut également s'appliquer à un organe électrique qui subit un réchauffement rapide en raison d'une utilisation intense.

On notera que les adjectifs numéraux cardinaux utilisés pour qualifier ou désigner certains éléments ne sont utilisés qu'à titre indicatif et n'impliquent aucune limitation sur ces éléments.

## Revendications

1. Circuit de conditionnement thermique (1) pour un véhicule automobile hybride ou électrique, dans lequel est apte à circuler un fluide frigorigène, ledit circuit (1) comprenant un compresseur (3), un condenseur (5), un évapo-condenseur (7), un évaporateur (9) et un échangeur thermique (11) couplé thermiquement à un organe électrique, tel qu'une batterie électrique de véhicule,
**caractérisé en ce que** le circuit comprend un premier détendeur (21) situé directement en amont de l'évaporateur (9), un deuxième détenteur (23) situé directement en amont de l'échangeur thermique (11), un troisième détendeur (25) situé directement en amont de l'évapo-condenseur (7) lorsque celui-ci fonctionne comme un condenseur et un détendeur bidirectionnel (19) et **en ce que** le circuit est configuré pour fonctionner au moins selon les trois modes suivants, dans lesquels le fluide frigorigène est apte à circuler en série et de façon successive :
- par le condenseur (5), le troisième détendeur(25) l'évapo-condenseur (7) le premier détendeur (21) et l'évaporateur (9), dit premier mode ;
- par le condenseur (5), le premier détendeur (21), l'évaporateur (9), le détendeur bidirectionnel (19), et l'évapo-condenseur (7), dit deuxième mode ;
ainsi que selon un autre mode, dit troisième mode, dans lequel le premier détendeur (21), l'évaporateur (9), sont disposés en parallèle de l'échangeur thermique (11) ainsi que du second détendeur (23)associé à cet échangeur (11) et de l'évapo-condenseur (7), le fluide frigorigène étant alors apte à circuler en série et de façon successive par le condenseur (5) puis par au moins deux desdits éléments (7, 9, 11) disposés en parallèle.

2. Circuit selon la revendication 1, **caractérisé en ce qu'**il est configuré pour que le circuit fonctionne selon le mode suivant, dans lequel le fluide frigorigène est apte à circuler en série et de façon successive par le condenseur (5), l'échangeur thermique (11), et l'évapo-condenseur (7), dit quatrième mode.

3. Circuit selon la revendication 1 ou 2, **caractérisé en ce qu'**il est configuré pour permettre l'inversion du sens de circulation du fluide frigorigène dans l'évapo-condenseur (7) au moins entre les premier et deuxième modes de fonctionnement dudit circuit.

4. Circuit selon l'une quelconque des revendications précédentes, **caractérisé en ce qu'**il est configuré pour que le circuit (1) fonctionne selon le mode suivant, dans lequel le fluide frigorigène est apte à circuler en série et de façon successive par le condenseur (5), l'évapo-condenseur (7) et l'échangeur thermique (11), dit cinquième mode.

5. Circuit selon l'une quelconque des revendications précédentes, **caractérisé en ce que** le détendeur bidirectionnel permet au fluide réfrigérant le traversant ou ayant traversé l'évapo-condenseur (7) de subir une détente, que l'évapo-condenseur (7) fonctionne en évaporateur ou en condenseur.

6. Circuit selon l'une quelconque des revendications précédentes, **caractérisé en ce qu'**il comprend
- une première branche(13) comportant le compresseur (3) et le condenseur (5) en aval du compresseur (3), ainsi qu'une vanne (V3) et un réservoir (R), le réservoir (R) étant disposé en amont du compresseur (3) et la vanne (V3) étant disposée en amont du réservoir (R) ;
- une deuxième branche (15) comportant, une vanne (V1), l'évaporateur et l'échangeur thermique (11) ;
- une troisième branche (17) comportant l'évapo-condenseur ; lesdites deuxième (15) et troisième (17) branches étant reliées en parallèle l'une à l'autre.

7. Circuit selon la revendication 6 **caractérisé en ce que** le circuit comprend :
- une quatrième branche (27) qui relie la deuxième branche (15) à la troisième branche (17) ;
la liaison étant réalisée sur la deuxième branche en amont des premier et deuxième détendeurs (21, 23) et la vanne (V1) de la deuxième branche, la liaison étant réalisée sur la troisième branche entre le détendeur bidirectionnel (19) et l'évapo-condenseur (7) ;
- une cinquième branche (29) qui relie la troisième branche (17) à la première branche (13), la liaison sur la troisième branche étant réalisée entre le troisième détendeur (25) et l'évapo-condenseur (7), la liaison sur la première branche (13) étant réalisée entre le réservoir (R) et la vanne (V3) de la première branche (13).

8. Circuit selon la revendication 6 ou 7, **caractérisé en ce que** la deuxième branche (15) comprend deux sous-branches (15a et 15b) connectées en parallèle l'une de l'autre, l'une comportant l'évaporateur (9) et l'autre l'échangeur thermique (11).

## Patentansprüche

1. Wärmeregelungskreislauf (1) für ein Hybrid- oder Elektrokraftfahrzeug, in welchem ein Kältemittel zirkulieren kann, wobei der Kreislauf (1) einen Kompressor (3), einen Kondensator (5), einen Verdampfungskondensator (7), einen Verdampfer (9) und einen Wärmetauscher (11), der mit einem elektrischen Organ wie etwa einer elektrischen Fahrzeugbatterie thermisch gekoppelt ist, umfasst,
**dadurch gekennzeichnet, dass** der Kreislauf ein erstes Expansionsventil (21) umfasst, das sich unmittelbar stromaufwärts des Verdampfers (9) befindet, ein zweites Expansionsventil (23), das sich unmittelbar stromaufwärts des Wärmetauschers (11) befindet, ein drittes Expansionsventil (25), das sich unmittelbar stromaufwärts des Verdampfungskondensators (7) befindet, wenn dieser als Kondensator arbeitet, und ein bidirektionales Expansionsventil (19), und dadurch, dass der Kreislauf dafür ausgelegt ist, mindestens in den folgenden drei Modi zu arbeiten, in denen das Kältemittel in Reihe und nacheinander strömen kann:
- durch den Kondensator (5), das dritte Expansionsventil (25), den Verdampfungskondensator (7), das erste Expansionsventil (21) und den Verdampfer (9), erster Modus genannt;
- durch den Kondensator (5), das erste Expansionsventil (21), den Verdampfer (9), das bidirektionale Expansionsventil (19) und den Verdampfungskondensator (7), zweiter Modus genannt;
sowie in einem weiteren Modus, dritter Modus genannt, in dem das erste Expansionsventil (21) und der Verdampfer (9) parallel zum Wärmetauscher (11) sowie zum diesem Wärmetauscher (11) zugeordneten zweiten Expansionsventil (23) und zum Verdampfungskondensator (7) angeordnet sind, wobei das Kältemittel dann in Reihe und nacheinander durch den Kondensator (5) und danach durch mindestens zwei der parallel angeordneten Elemente (7, 9, 11) strömen kann.

2. Kreislauf nach Anspruch 1, **dadurch gekennzeichnet, dass** er dafür ausgelegt ist, dass der Kreislauf im folgenden Modus arbeitet, in dem das Kältemittel in Reihe und nacheinander durch den Kondensator (5), den Wärmetauscher (11) und den Verdampfungskondensator (7) strömen kann, vierter Modus genannt.

3. Kreislauf nach Anspruch 1 oder 2, **dadurch gekennzeichnet, dass** er dafür ausgelegt ist, die Umkehrung der Strömungsrichtung des Kältemittels im Verdampfungskondensator (7) mindestens zwischen dem ersten und dem zweiten Funktionsmodus des Kreislaufs zu ermöglichen.

4. Kreislauf nach einem der vorhergehenden Ansprüche, **dadurch gekennzeichnet, dass** er dafür ausgelegt ist, dass der Kreislauf (1) im folgenden Modus arbeitet, in dem das Kältemittel in Reihe und nacheinander durch den Kondensator (5), den Verdampfungskondensator (7) und den Wärmetauscher (11) strömen kann, fünfter Modus genannt.

5. Kreislauf nach einem der vorhergehenden Ansprüche, **dadurch gekennzeichnet, dass** das bidirektionale Expansionsventil ermöglicht, dass das Kältemittel, das es durchquert oder den Verdampfungskondensator (7) durchquert hat, eine Entspannung erfährt, gleichgültig, ob der Verdampfungskondensator (7) als Verdampfer oder als Kondensator arbeitet.

6. Kreislauf nach einem der vorhergehenden Ansprüche, **dadurch gekennzeichnet, dass** er umfasst:
- einen ersten Zweig (13), der den Kompressor (3) und den Kondensator (5) stromabwärts des Kompressors (3) aufweist, sowie ein Ventil (V3) und einen Behälter (R), wobei der Behälter (R) stromaufwärts des Kompressors (3) angeordnet ist und das Ventil (V3) stromaufwärts des Behälters (R) angeordnet ist;
- einen zweiten Zweig (15), der ein Ventil (V1), den Verdampfer und den Wärmetauscher (11) aufweist;
- einen dritten Zweig (17), der den Verdampfungskondensator aufweist;
wobei der zweite (15) und der dritte (17) Zweig parallel zueinander angeordnet sind.

7. Kreislauf nach Anspruch 6, **dadurch gekennzeichnet, dass** der Kreislauf umfasst:
- einen vierten Zweig (27), der den zweiten Zweig (15) mit dem dritten Zweig (17) verbindet;
wobei die Verbindung am zweiten Zweig stromaufwärts des ersten und des zweiten Expansionsventils (21, 23) und des Ventils (V1) des zweiten Zweigs hergestellt wird, wobei die Verbindung am dritten Zweig zwischen dem bidirektionalen Expansionsventil (19) und dem Verdampfungskondensator (7) hergestellt wird;
- einen fünften Zweig (29), der den dritten Zweig (17) mit dem ersten Zweig (13) verbindet, wobei die Verbindung am dritten Zweig zwischen dem dritten Expansionsventil (25) und dem Verdampfungskondensator (7) hergestellt wird, wobei die Verbindung am ersten Zweig (13) zwischen dem Behälter (R) und dem Ventil (V3) des ersten Zweigs (13) hergestellt wird.

8. Kreislauf nach Anspruch 6 oder 7, **dadurch gekennzeichnet, dass** der zweite Zweig (15) zwei Teilzweige (15a und 15b) umfasst, die zueinander parallel geschaltet sind, wobei einer den Verdampfer (9) und der andere den Wärmetauscher (11) aufweist.

## Claims

1. Thermal conditioning circuit (1) for a hybrid or electric motor vehicle, in which a refrigerant is able to circulate, said circuit (1) comprising a compressor (3), a condenser (5), an evaporator-condenser (7), an evaporator (9) and a heat exchanger (11) thermally coupled to an electric member, such as a vehicle electric battery,
**characterized in that** the circuit comprises a first expansion valve (21) located directly upstream of the evaporator (9), a second expansion valve (23) located directly upstream of the heat exchanger (11), a third expansion valve (25) located directly upstream of the evaporator-condenser (7) when the latter operates as a condenser, and a bidirectional expansion valve (19), and **in that** the circuit is configured to operate at least in the following three modes, in which the refrigerant is able to circulate in series and successively:
- through the condenser (5), the third expansion valve (25), the evaporator-condenser (7), the first expansion valve (21) and the evaporator (9), called the first mode;
- through the condenser (5), the first expansion valve (21), the evaporator (9), the bidirectional expansion valve (19) and the evaporator-condenser (7), called the second mode;
as well as in another mode, called the third mode, in which the first expansion valve (21) and the evaporator (9) are arranged in parallel with the heat exchanger (11), the second expansion valve (23) associated with this exchanger (11), and the evaporator-condenser (7), the refrigerant then being able to circulate in series and successively through the condenser (5) and then through at least two of said elements (7, 9, 11) arranged in parallel.

2. Circuit according to Claim 1, **characterized in that** it is configured so that the circuit operates in the following mode, in which the refrigerant is able to circulate in series and successively through the condenser (5), the heat exchanger (11) and the evaporator-condenser (7), called the fourth mode.

3. Circuit according to Claim 1 or 2, **characterized in that** it is configured to allow the reversal of the direction of circulation of the refrigerant in the evaporator-condenser (7) at least between the first and second operating modes of said circuit.

4. Circuit according to any one of the preceding claims, **characterized in that** it is configured so that the circuit (1) operates in the following mode, in which the refrigerant is able to circulate in series and successively through the condenser (5), the evaporator-condenser (7) and the heat exchanger (11), called the fifth mode.

5. Circuit according to any one of the preceding claims, **characterized in that** the bidirectional expansion valve allows the refrigerant passing through it or having passed through the evaporator-condenser (7) to undergo expansion, whether the evaporator-condenser (7) operates as an evaporator or as a condenser.

6. Circuit according to any one of the preceding claims, **characterized in that** it comprises
- a first branch (13) comprising the compressor (3) and the condenser (5) downstream of the compressor (3), as well as a valve (V3) and a reservoir (R), the reservoir (R) being arranged upstream of the compressor (3) and the valve (V3) being arranged upstream of the reservoir (R);
- a second branch (15) comprising a valve (V1), the evaporator and the heat exchanger (11);
- a third branch (17) comprising the evaporator-condenser;
said second (15) and third (17) branches being connected in parallel with one another.

7. Circuit according to Claim 6, **characterized in that** the circuit comprises:
- a fourth branch (27) which connects the second branch (15) to the third branch (17);
the connection being made on the second branch upstream of the first and second expansion valves (21, 23) and the valve (V1) of the second branch, the connection being made on the third branch between the bidirectional expansion valve (19) and the evaporator-condenser (7);
- a fifth branch (29) which connects the third branch (17) to the first branch (13), the connection on the third branch being made between the third expansion valve (25) and the evaporator-condenser (7), the connection on the first branch (13) being made between the reservoir (R) and the valve (V3) of the first branch (13).

8. Circuit according to Claim 6 or 7, **characterized in that** the second branch (15) comprises two sub-branches (15a and 15b) connected in parallel with one another, one comprising the evaporator (9) and the other the heat exchanger (11).
